# EUROPEAN PATENT APPLICATION

(11) **EP 4 293 622 A1**
(43) Date of publication of application: **20.12.2023**
(21) Application number: 23178658.3
(22) Date of filing: 12.06.2023
(51) Int. Cl.: G06T 7/11, G06T 7/30, G06T 15/08, G06T 17/00, G06V 20/56

(54) **METHOD FOR TRAINING NEURAL NETWORK MODEL AND METHOD FOR GENERATING IMAGE**

(30) Priority: 13.06.2022 CN 202210662178
(71) Applicant: Beijing Tusen Zhitu Technology Co., Ltd., Beijing 100016 (CN)
(72) Inventor: YAN, Yan, Beijing, 100016 (CN); CHEN, Yuntao, Beijing, 100016 (CN); WANG, Naiyan, Beijing, 100016 (CN)
(74) Representative: Isarpatent

(57) **Abstract**

The present disclosure relates to a method for training a neural network model and a method for generating an image. The method for training a neural network model includes: acquiring an image about a scene captured by a camera; determining a plurality of rays at least according to parameters of the camera when capturing the image; determining a plurality of sampling points according to a relative positional relationship between the rays and a point cloud, where the point cloud is associated with a part of the scene; determining color information of pixels of the image which correspond to the sampling points; and training the neural network model according to positions of the sampling points and the color information of the pixels.

## Description

### CROSS-REFERENCE TO RELATED APPLICATIONS

The present disclosure claims priority to Chinese Patent Application No. 202210662178.7, titled "METHOD FOR TRAINING NEURAL NETWORK MODEL AND METHOD FOR GENERATING IMAGE", filed on June 13, 2022, the content of which is incorporated herein by reference in its entirety.

### TECHNICAL FIELD

The present disclosure relates to scene simulation and, more particularly, to a method for training a neural network model and a method for generating an image using a neural network model.

### BACKGROUND

The rapid development of deep learning has induced an increasing demand for the amount of data. In the field of autonomous driving, a large amount of data is required to allow deep learning models to cover a variety of scenes. The usual practice is to let an autonomous vehicle run on a test road repeatedly, during which sensors installed on the vehicle collect data about the environment around the vehicle. However, some rare scenes may hardly be met in such road tests. Therefore, it is difficult to collect enough data for these rare scenes, and the ability of deep learning models to process such scenes is inferior. Therefore, autonomous driving simulation platforms, especially those using deep neural networks, are receiving more attention. In the autonomous driving simulation platform, it is generally necessary to model high-speed moving vehicles, which requires simulation and rendering of complex scenes, such as wide range scenes.

### SUMMARY

The present disclosure provides a method for training a neural network model and a method for generating an image using a neural network model. A simulation platform employing such methods is able to process complex scenes.

In one aspect, the present disclosure provides a method for training a neural network model, including:
acquiring an image about a scene captured by a camera;
determining a plurality of rays at least according to parameters of the camera when capturing the image;
determining a plurality of sampling points according to a relative positional relationship between the rays and a point cloud, where the point cloud is associated with a part of the scene;
determining color information of pixels of the image which correspond to the sampling points; and
training the neural network model according to positions of the sampling points and the color information of the pixels.

In another aspect, the present disclosure provides a method for generating an image, comprising:
determining a plurality of rays emitted from a predetermined position in a plurality of directions,
determining a plurality of sampling points according to a relative positional relationship between the rays and a point cloud, the point cloud being associated with at least a part of a scene,
inputting the plurality of sampling points into a trained neural network model to obtain color information of each sampling point,
generating an image about the at least part of the scene according to the color information of the plurality of sampling points.

In an autonomous driving simulation platform, if a moving object (e.g., a vehicle) is to be modeled, the range of scenes for simulation and rendering is very broad. The method for training a neural network model according to the present disclosure may process such complex scenes well. The disclosed method for training a neural network model combines the image and point cloud to train a neural network model, making full use of the point cloud for its characteristics such as the sparsity and registrability of the point cloud, hence the neural network model may represent a wide range background, and/or represent the moving object accurately. According to the method for generating an image disclosed in the present disclosure, the process of generating the image makes full use of the point cloud for its characteristics such as the sparsity and registrability of the point cloud, generates image information associated with a wide range background, and/or generates image information of the moving object accurately.

### BRIEF DESCRIPTION OF THE DRAWINGS

The drawings exemplarily illustrate embodiments and constitute a part of the description, and together with the text description, serve to explain the exemplary implementation of the embodiments. Apparently, the drawings in the following description illustrate only some rather than all embodiments of the present disclosure, and those skilled in the art can obtain other drawings according to these drawings without any inventive effort. Throughout the drawings, like reference numbers designate similar, but not necessarily identical, elements.
FIG. 1 is a schematic diagram of a vehicle in which various techniques of the present disclosure may be implemented;
FIG. 2 is a schematic diagram of a computing device according to an exemplary embodiment of the present disclosure;
FIG. 3A and FIG. 3B are schematic diagrams of a scene at different moments according to an exemplary embodiment of the present disclosure;
FIG. 4 is a flowchart of a method for training a neural network model according to an exemplary embodiment of the present disclosure;
FIG. 5 is a flowchart of a method for generating an image using a trained neural network model according to an exemplary embodiment of the present disclosure;
FIGS. 6A to 6C are schematic diagrams of training a neural network model according to an exemplary embodiment of the present disclosure;
FIG. 7 is a flowchart of a process of generating a plurality of sampling points using a plurality of grids according to an exemplary embodiment of the present disclosure.

### DETAILED DESCRIPTION

The present disclosure will be further described in detail below in conjunction with the accompanying drawings and embodiments. It should be understood that the specific embodiments described here are only used to explain the present disclosure, but not to limit the present disclosure. The embodiments in the present disclosure and the features in the embodiments can be combined with each other if there is no conflict. In addition, it should be noted that, for the convenience of description, only some structures associated with the present disclosure are shown in the drawings but not all structures.

It should be noted that the concepts such as "first" and "second" mentioned in the embodiments of the present disclosure are only used to distinguish one from another of different apparatuses, modules, units or other objects, and are not used to define the sequence of performing functions of these apparatuses, modules, units or other objects or interdependence thereof.

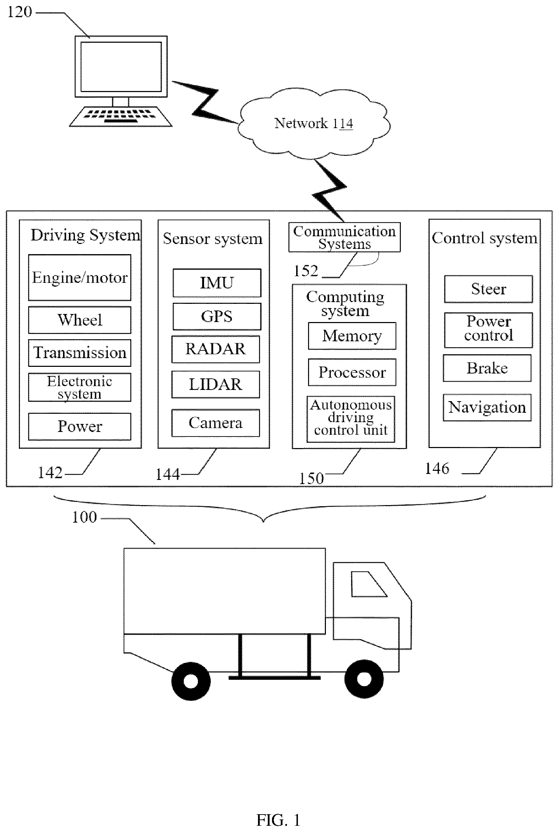

FIG. 1 is a schematic diagram of a vehicle 100 in which various techniques disclosed herein may be implemented. The vehicle 100 may be a car, truck, motorcycle, bus, recreational vehicle, amusement park vehicle, streetcar, golf cart, train, trolleybus, or others. The vehicle 100 may operate fully or partially in an autonomous driving mode. The vehicle 100 may control itself in the automatic driving mode, for example, the vehicle 100 may determine the current state of the vehicle and the current state of the environment in which the vehicle is located, determine a predicted behavior of at least one other vehicle in the environment, determine a confidence level corresponding to the possibility of the one other vehicle performing the predicted behavior, and control the vehicle 100 itself according to the information as determined. In the autonomous driving mode, the vehicle 100 may operate without human intervention.

The vehicle 100 may include various vehicle systems such as a driving system 142, a sensor system 144, a control system 146, a computing system 150, and a communication system 152. The vehicle 100 may include more or fewer systems, and each system may include a plurality of units. Further, all the systems and units of the vehicle 100 may be interconnected. For example, the computing system 150 may communicate data with one or more of the driving system 142, the sensor system 144, the control system 146, and the communication system 152. In still further examples, additional functional or physical components may be added to the vehicle 100.

The driving system 142 may include a number of operable components (or units) that provide kinetic energy to the vehicle 100. In an embodiment, the driving system 142 may include an engine or motor, wheels, a transmission, electronic systems, and a power (or a power source).

The sensor system 144 may include a plurality of sensors for sensing information about the environment and conditions of the vehicle 100. For example, the sensor system 144 may include an inertial measurement unit (IMU), a global navigation satellite system (GNSS) transceiver (e.g., a global positioning system (GPS) transceiver), a radio detection and ranging (RADAR) sensor, a light detection and ranging (LIDAR) sensor, an acoustic sensor, an ultrasonic sensor, and an image capture apparatus such as a camera. One or more sensors included in the sensor system 144 may be actuated individually or collectively to update the pose (e.g., position and orientation) of the one or more sensors.

The LIDAR sensor may be any sensor that uses laser light to sense objects in the environment in which the vehicle 100 is located. In an embodiment, the LIDAR sensor may include a laser source, a laser scanner, and a detector. The LIDAR sensor is designed to work in a continuous or discontinuous detection mode. The image capture apparatus may be an apparatus for capturing a plurality of images of the environment in which the vehicle 100 is located. An example of the image capture apparatus is a camera, which may be an still camera or a video camera.

Some sensors of the sensor system 144, such as the camera and the LIDAR sensor, may have overlapping fields of view, so that at the same time or almost the same time, an image captured by the camera and a point cloud collected by the LIDAR sensor have data about the same scene content.

The control system 146 is used to control the operation of the vehicle 100 and components (or units) thereof. Accordingly, the control system 146 may include various units such as a steering unit, a power control unit, a braking unit, and a navigation unit.

The communication system 152 may provide a means for the vehicle 100 to communicate with one or more devices or other vehicles in the surrounding environment. In an exemplary embodiment, the communication system 152 may communicate with one or more devices directly or through a communication network. The communication system 152 may be, for example, a wired or wireless communication system. For example, the communication system may support 3G cellular communication (e.g., CDMA, EVDO, GSM/GPRS) or 4G cellular communication (e.g., WiMAX or LTE), and may also support 5G cellular communication. Optionally, the communication system may communicate with a Wireless Local Area Network (WLAN) (e.g., through WIFI^{®}). Information/data may travel between the communication system 152 and a computing device (e.g., a computing device 120) located remotely from vehicle 100 via a network 114. The network 114 may be a single network, or a combination of at least two different networks. For example, the network 114 may include, but not limited to, one or a combination of a local area network, a wide area network, a public network, a private network, and the like. It should be noted that although in FIG. 1, the computing device 120 is remote to the vehicle 100, those skilled in the art can understand that the computing device 120 may also be located in the vehicle 100 and be a part of the computing system 150.

The computing system 150 may control some or all of the functions of the vehicle 100. An autonomous driving control unit in the computing system 150 may be used to recognize, evaluate, and avoid or overcome potential obstacles in the environment in which vehicle 100 is located. In some embodiments, the autonomous driving control unit is used to combine data from sensors, such as GPS transceiver data, RADAR data, LIDAR data, camera data, and data from other vehicle systems, to determine a path or trajectory of the vehicle 100.

The computing system 150 may include at least one processor (which may include at least one microprocessor) and memory (which is an example of a computer-readable storage medium), and the processor executes processing instructions stored in the memory. In some embodiments, the memory may contain processing instructions (e.g., program logic) to be executed by the processor to implement various functions of the vehicle 100. The memory may also include other instructions, including instructions for data transmission, data reception, interaction, or control of the driving system 142, the sensor system 144, the control system 146 or the communication system 152.

In addition to storing processing instructions, the memory may store a variety of information or data, such as parameters of various sensors of the sensor system 144 and data received from the sensor system 144 (e.g., the point cloud received from the LIDAR sensor, and the images received from the camera).

Although the autonomous driving control unit is shown in FIG. 1 as being separate from the processor and memory, it should be understood that in some embodiments some or all of the functions of the autonomous driving control unit may be implemented through program code instructions residing in the memory and executed by the processor.

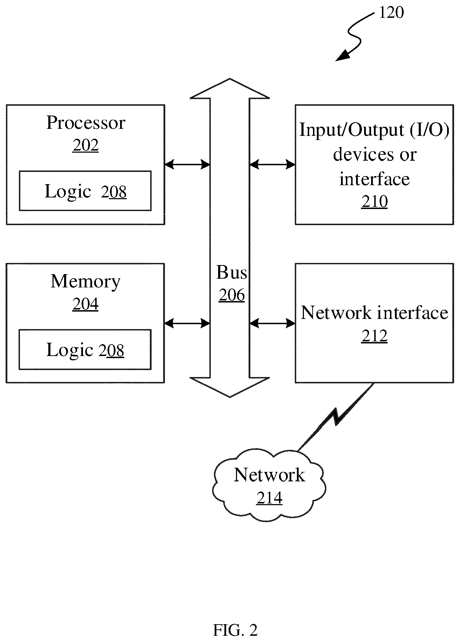

FIG. 2 is a schematic diagram of the computing device 120 of FIG. 1, according to an exemplary embodiment of the present disclosure. The computing device 120 may be a server, personal computer (PC), laptop computer, tablet computer, personal digital assistant (PDA), cellular telephone, smartphone, set-top box (STB), or the like. An example of the computing device 120 may include a data processor 202 (e.g., a system-on-chip (SoC), a general-purpose processing core, a graphics core, and optionally other processing logic) and a memory 204 that may communicate with each other via a bus 206 or other data transfer system. The computing device 120 may also include various input/output (I/O) devices or an interface 210 (e.g., a touch screen display, audio jack, voice interface) and an optional network interface 212. The network interface 212 may support 3G cellular communication (e.g., CDMA, EVDO, GSM/GPRS) or 4G cellular communication (e.g., WiMAX or LTE), and may also support 5G cellular communication. Optionally, the network interface 212 may communicate with a wireless local area network (WLAN) (e.g., through WIFI^{®}). In an exemplary embodiment, the network interface 212 may include or support virtually any wired and/or wireless communication and data processing mechanism by which information/data may be exchanged between the computing device 120 and another computing device or system (e.g., the computing system 150) via a network 214. The network 214 may be the same network as the network 114 shown in FIG. 1 or another network than the network 114.

The memory 204 is an example of a computer-readable storage medium, on which one or more instruction sets, software, firmware, or other processing logic (e.g., a logic 208) for implementing any one or more methods or functions described and/or indicated herein are stored. During execution by the computing device 120, the logic 208 or a part thereof may also reside wholly or at least partially within the processor 202. The logic 208 or a part thereof may also be configured as a processing logic or logic, and at least a part of the processing logic or logic is partially implemented in hardware. The logic 208 or a part thereof may also be transmitted or received via the network 214 through the network interface 212.

The term "computer-readable storage medium" may be understood to include a single non-transitory medium or a plurality of non-transitory media (e.g., a centralized or distributed database and/or associated cache and computing system) storing one or more sets of instructions. The term "computer-readable storage medium" may also be understood as including any non- transitory medium capable of storing, encoding or carrying instruction sets for execution by computers and enabling computers to execute any one or more of the methods of various embodiments, or capable of storing, encoding or carrying data structures utilized by or associated with such instruction sets. The term "computer-readable storage medium" may thus be understood to include, but is not limited to, solid-state memories, optical media, and magnetic media.

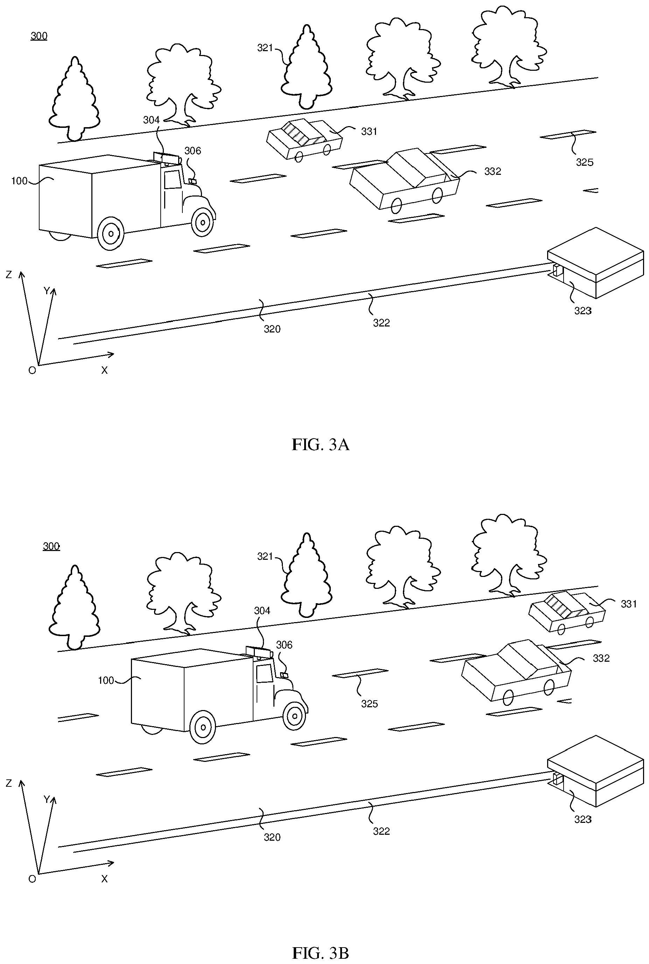

FIG. 3A and 3B show schematic diagrams of a scene according to exemplary embodiments of the present application. FIG. 3A is a schematic diagram of the scene at a first moment, and FIG. 3B is a schematic diagram of the scene at a second moment which is later than the first moment. As shown in FIGS. 3A and 3B, the vehicle 100 can run in a scene 300, and the vehicle 100 collects scene data (also referred to as sensor data) about the scene 300 through the sensor system 144 (see FIG. 1 ). The scene 300 may include various objects (i.e., scene content), such as static objects and dynamic objects. The static objects can form the background of the scene, including buildings, street signs, trees, curbs, and the like. The dynamic objects include vehicles, bicycles, pedestrians, etc. The relative positions between the static objects usually do not change when the vehicle 100 collects the scene data, while the relative positions between the dynamic objects and the relative positions between the dynamic objects and the static objects usually change when the vehicle 100 collects the scene data.

For example, in the example of FIGS. 3A and 3B, the scene 300 may include static objects such as a road 320, a tree 321, a curb 322, a building 323, and a lane line 325 on the road, which constitute the background of the scene 300. The scene 300 may also include dynamic objects such as a vehicle 331 and a vehicle 332. As shown in FIG. 3A, the vehicle 331 and the vehicle 332 are located approximately in the middle of the scene 300 at the first moment. As shown in FIG. 3B, the vehicle 331 and the vehicle 332 move to a position closer to the right of the scene at the second moment. In FIG. 3A and FIG. 3B, the positions of the static objects such as the road 320, the tree 321, the curb 322, the building 323, and the lane line 325 do not change, while positions of the dynamic objects such as the vehicle 331 and the vehicle 332 change, from the first moment to the second moment.

The sensor system 144 of the vehicle 100 (see FIG. 1) includes a camera 304 and a LIDAR sensor 306 shown in FIGS. 3A and 3B. The camera 304 and the LIDAR sensor 306 have overlapping fields of view. Although one camera and one LIDAR sensor on the vehicle 100 are shown in FIG. 3A and FIG. 3B, those skilled in the art can understand that the sensor system of the vehicle 100 may include more cameras and more LIDAR sensors. The sensor system of vehicle 100 may include other types of sensors not shown in FIG. 3. The vehicle 100 may run repeatedly in the scene 300. When the vehicle 100 is running in the scene 300, the sensor system of the vehicle 100 may be used to collect the scene data of the scene 300. The scene data may include one or more frames of images captured by the camera 304 and one or more frames of point clouds collected by the LIDAR sensor 306. The scene data may also include scene data collected by other types of sensors (e.g., Radar). As described above with reference to FIG. 1, the computing system 150 of the vehicle 100 may be interconnected with the sensor system 144 to control the sensors of the sensor system 144 (e.g., the camera and the LIDAR sensor) to collect the scene data (e.g., the image and the point cloud) of the scene.

The point cloud collected by the LIDAR sensor 306 includes points representing the scene content in the LIDAR sensor's field of view. In some embodiments, the points of the point cloud may include position information associated with the scene content. For example, each point in the point cloud collected by the LIDAR sensor has a set of coordinates in a local coordinate system (i.e., a coordinate system established with the vehicle 100 as a reference object). In an example, the local coordinate system takes the center of the LIDAR sensor as the origin, the orientation of the vehicle as the X axis of the local coordinate system, a direction perpendicular to the ground where the vehicle is on as the Z axis of the local coordinate system, and a direction perpendicular to both the X axis and the Z axis as the Y axis of the local coordinate system.

Referring to FIGS. 3A and 3B in conjunction with FIG. 1, while the vehicle 100 is running, the computing system 150 can send a trigger signal simultaneously to the sensors of the sensor system 144 (e.g., the camera 304 and the LIDAR sensor 306), triggering the camera 304 and the LIDAR sensor 306 simultaneously or almost simultaneously to acquire the image and the point cloud. Triggered by one trigger signal, the camera 304 captures one frame of image, and the LIDAR sensor 306 collects one frame of point cloud. When the vehicle 100 is running, the computing system 150 may periodically send trigger signals to the camera 304 and the LIDAR sensor 306 to collect a plurality of frames of images and a plurality of frames of point clouds. Since the camera 304 and the LIDAR sensor 306 have overlapping fields of view, the image and the point cloud captured or collected simultaneously or almost simultaneously by the camera and the LIDAR sensor have data about the same scene content. The computing system 150 adds a time stamp to each frame of image and point cloud, and the time stamp can be used to indicate when the frame of image and point cloud is captured or collected. The computing system 150 may also add parameters of the camera 304 and parameters of the LIDAR sensor 306 (collectively referred to as sensor parameters) to each frame of image and each frame of point cloud. These sensor parameters may include internal and external parameters of each sensor. The internal parameters of the camera 304 include, for example, a focal length, a pixel size, and a position of an imaging center for the image, etc., and the external parameters of the camera 304 include a pose of the camera (the pose includes position and orientation). Such scene data (e.g., images and point clouds) provided with the time stamp and sensor parameters may be stored in the memory of the computing system 150 or transmitted to the computing device 120.

In some embodiments, the computing device 120 may perform object recognition on each frame of point cloud received from the computing system 150. The computing device 120 may recognize points associated with a dynamic object (e.g., the vehicle 331 or the vehicle 332) in some frames (these frames are also referred to herein as the dynamic object's associated frames). For these dynamic object's associated frames, the computing device 120 may generate an original representation of the dynamic object (e.g., an original bounding box) according to the points associated with the dynamic object in each frame, and the computing device 120 may remove other points for each frame of point cloud (e.g., points outside the original bounding box), and keep only points associated with the dynamic object. After the removing operation, these frames each have only the points associated with the dynamic object, and are collectively referred to herein as a point cloud sequence associated with the dynamic object. In other words, the point cloud sequence includes multiple frames of point clouds each has only the points associated with the dynamic object. The point clouds of the sequence may be registered through an iterative closest point (ICP) algorithm, and registered point clouds of the sequence may be superimposed to obtain the point cloud (i.e. aggregated point cloud) of the dynamic object. A more accurate shape of the dynamic object can be obtained according to the point cloud of the dynamic object, from which a representation (e.g., a bounding box) of the dynamic object can be generated. The ICP algorithm may determine the pose of the dynamic object for each of the dynamic object's associated frames more accurately.

In some embodiments, the computing device 120 removes points associated with dynamic objects from each frame of point cloud received from the computing system 150, keeping only those points associated with static objects. These frames are then aggregated to obtain a whole picture of the static objects in the scene. In some implementations, the computing device 120 uses a segmentation algorithm to remove the points associated with the dynamic objects (e.g., the vehicles 331 and 332) from each frame, keeping the points associated with the static objects (e.g., the road 320, tree 321, building 323, and lane line 325). In some embodiments, the computing device 120 may firstly execute the segmentation algorithm to assign semantic categories to each point in the point clouds. The semantic categories may include a static semantic category (associated with the static objects) and a dynamic semantic category (associated with the dynamic objects). The computing device 120 then deletes points to which the dynamic semantic category is assigned from the point clouds, keeping points to which the static semantic category is assigned.

After removing the points associated with the dynamic objects, the computing device 120 can relate each frame of point cloud to a common coordinate system (also called the world coordinate system, established by taking a static object of the scene 300 (e.g., the road or building) as a reference object) to generate an aggregated point cloud, and such a point cloud is also referred to as a point cloud of static objects or a point cloud of the background here. For example, for a frame of point cloud, the frame may be transformed from a corresponding local coordinate system to a world coordinate system according to the pose of the vehicle 100 (e.g., the position and orientation of the vehicle) when the frame of point cloud is collected. In this way, each point of the point cloud has a set of coordinates in the world coordinate system. As an example, the origin of the world coordinate system is at the lower left of the scene 300 shown in FIG. 3A and FIG.3B, a direction parallel to the road 300 is the X axis, a direction perpendicular to the road and parallel to a surface of the road is the Y axis, and a direction perpendicular to the surface of the road is the Z axis.

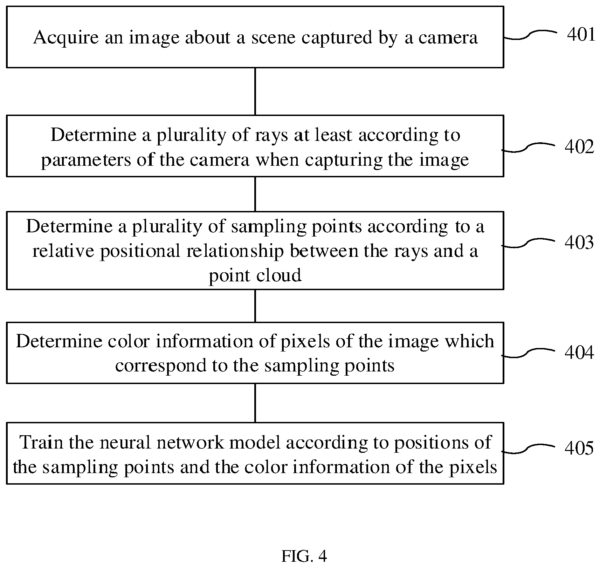

FIG. 4 shows a method for training a neural network model according to an exemplary embodiment of the present disclosure. The method for training a neural network model can be executed by, for example, the computing device 120 shown in FIG. 2.

As shown in FIG. 4, in step 401, the computing device receives or acquires one or more images about a scene captured by a camera.

As shown in FIGS. 3A and 3B, in conjunction with FIGS. 1 and 2, the computing device 120 may receive from the computing system 150 of the vehicle 100 one or more frames of images about the scene 300 captured by the camera 304 of the sensor system 144 when the vehicle 100 is running in the scene 300. The computing device 120 may also acquire one or more frames of images from the scene data stored in the memory 204. As described above, the scene data stored in the memory 204 is received by the computing device 120 from the computing system 150 of the vehicle 100 in advance.

In step 402, the computing device 120 determines, for each image, a plurality of rays at least according to the parameters of the camera when capturing the image (i.e. the parameters of the camera when the camera captures the image).

For each frame of image acquired at step 401, the computing device 120 may select one or more pixels of the image. As noted above, the camera 304 and LIDAR sensor 306 of the sensor system 144 have overlapping fields of view. In this way, upon selection of pixels, those pixels that reflect the same scene content as captured by the camera 304 and the LIDAR sensor 306 may be selected. The computing device 120 may determine the scene content described by each selected pixel (or associated with each selected pixel) through semantic recognition and generate attribute information of the selected pixel accordingly. The attribute information of the selected pixel is used to indicate the semantic category of the selected pixel, i.e., the object described by the selected pixel (or associated with the selected pixel). From the attribute information, it can be learned whether a selected pixel describes or is associated with a static object or a dynamic object. If a selected pixel describes or is associated with a dynamic object, the attribute information may indicate which object the selected pixel describes or is associated with (for example, the selected pixel describes or is associated with the vehicle 331 or the vehicle 332). For any pixel selected in a frame of image, according to the parameters of the camera 304 when the frame of image is being captured, at least one ray can be determined (that is, a pixel can generate at least one ray or a pixel corresponds to at least one ray), and the attribute information of the pixel is assigned to the at least one ray. Since the computing system 150 adds the parameters of the camera when capturing the image to the image, the computing device 120 can directly read from the image the parameters of the camera (e.g., the external and internal parameters of the camera) when capturing the frame of image. For any pixel selected in a frame of image, with the parameters of the camera when capturing the frame of image, an optical path of a part of at least one beam of light that generates the pixel can be determined. According to the optical path, a ray pointing to the scene can be generated, the origin being the camera's position when capturing the frame of image, and the direction of the ray is opposite to the direction of the beam of light that generates the pixel.

In some embodiments, for each frame of image acquired in step 401, the computing device 120 determines content of the image which is associated with a part of the scene 300 (i.e., a first part), and the computing device 120 determines a plurality of rays according to the content of the image which is associated with the part of the scene in addition to the parameters of the camera 304 when capturing the image. The so-called part of the scene may be at least one object in the scene, for example, static objects (i.e., the background) or a dynamic object (e.g., the vehicle 331 or the vehicle 332) in the scene 300.

In some embodiments, the first part of the scene is static objects (i.e., the background) of the scene. To determine the content (e.g., the pixels of the image) associated with the first part of the scene (e.g., the static objects) in the image, the computing device 120 can perform semantic recognition on each frame of image acquired in step 401 to recognize the content associated with another part (i.e., a second part, for example, dynamic objects of the scene), and remove the content associated with the second part (i.e., the dynamic objects) from the image to obtain the content associated with the first part of the scene (i.e., the static objects). For example, the computing device 120 can perform semantic recognition on the image to recognize pixels associated with dynamic objects (e.g., the vehicle 331 and the vehicle 332), filter out pixels associated with the dynamic objects from all pixels of the image, and obtain pixels of the image which are associated with the static objects. In this way, for a frame of image, according to the parameters of the camera when capturing the frame of image and the pixels of the image which are associated with the static objects, a plurality of rays can be generated for the static objects, and each ray includes an origin and direction (for example, an origin and direction in the world coordinate system).

A shadow (i.e., a projection) of dynamic objects is not considered when determining the pixels of the image which are associated with static objects through semantic recognition as described above. Generally, semantic recognition does not label a shadow of an object. Therefore, in some embodiments, to determine the content associated with the static objects (i.e., the background) of the scene in the image, the computing device 120 can perform semantic recognition on each frame of image acquired in step 401, and determine the content associated with the dynamic objects (e.g., the vehicle 331 and vehicle 332). Then, the computing device 120 determines the content associated with the shadow (i.e., the projection) of the dynamic objects in the image, and removes the content associated with the shadow of the dynamic objects and the content associated with the dynamic objects from the image to obtain the content associated with the static objects. For example, the computing device 120 may perform semantic recognition on a frame of image to recognize pixels associated with dynamic objects. The computing device 120 can determine where the sun is in the sky when the image is being captured according to the time and geographic position when the image is being captured, and determine the pixels of the image which are associated with the shadow of the dynamic objects according to the above-described representation of the dynamic objects (e.g., the bounding boxes), in conjunction with the pose of the dynamic objects in the frame of point cloud collected at the same time as the image is being captured and the parameters of the camera when the image is being captured. The pixels associated with the dynamic objects and the pixels associated with the shadow of the dynamic objects are filtered out from the image to obtain the final pixels associated with the static objects.

In some embodiments, the first part of the scene is a dynamic object of the scene (e.g., the vehicle 331). The computing device 120 may perform semantic recognition on each frame of image acquired in step 401 to determine content associated with the first part of the scene in the image. For example, the computing device 120 may perform semantic recognition on the image to determine pixels associated with the dynamic object (e.g., the vehicle 331). The computing device 120 may generate an object coordinate system according to a representation of the dynamic object (e.g., a bounding box). As described above, the representation of the dynamic object can be generated according to the point cloud of the dynamic object. In an example, the origin of the object coordinate system is at the center of the representation of the dynamic object (e.g., the bounding box). For a frame of image, the computing device 120 can convert the pose of the camera when capturing the frame of image into a pose in the object coordinate system, and then generate a plurality of rays for this dynamic object according to the parameters of the camera when capturing the frame of the image and pixels of the image which are associated with the dynamic object, each ray including an origin and direction (for example, an origin and direction in the object coordinate system).

In step 403, the computing device 120 determines a plurality of sampling points according to the relative positional relationship between the rays and the point cloud (the point cloud is associated with the first part of the scene).

A part of the scene which is associated with the rays (i.e., the object described by or associated with the pixel corresponding to the ray) can be known from the attribute information of the rays, and the computing device 120 can determine a plurality of sampling points according to the rays and the point cloud associated with the part of the scene. It is these sampling points that determine the colors of the pixels corresponding to the rays. In other words, the colors of the pixels corresponding to the rays are associated with these sampling points. Since each point in the point cloud includes position data, which reflects positions of relevant content or objects in the scene, given the origin and direction of a ray, one or more intersection points (i.e., the sampling points) of the ray with the relevant content or objects of the scene can be determined in conjunction with the point cloud. It is the beam of light from the intersection point that generates the pixel corresponding to the ray after reaching a photosensitive area of the camera. In other words, the color of the pixel reflects the color of the intersection point.

When the first part of the scene is static objects (i.e., the background) of the scene, the computing device 120 determines a plurality of sampling points about the static objects (i.e., the background) according to the relative positional relationship between the rays and the point cloud of the static objects (i.e., the point cloud of the background). When the computing device 120 determines the sampling points about the static objects, if some rays do not have any intersection point with the static objects, and a point can be selected on each such ray so that the distance between the point and the origin of the ray is greater than the distance between the origin of the ray and the farthest point in the scene, and the selected point is the sampling point.

In some embodiments, the computing device 120 may generate a grid, and the grid is used to determine the positional relationship between the rays and the point cloud of the static objects. For example, the space defined by a world coordinate system may be divided into a three-dimensional (3D) grid. The 3D grid may include equally sized unit cubes (also referred to as voxels), which are arranged next to each other. The computing device 120 may select a point in each unit cube as a grid point. For example, a vertex of each unit cube closest to the origin of the world coordinate system may be selected as the grid point of the unit cube. In this way, the grid generated by the computing device 120 may have a plurality of grid points, and the number of grid points is the same as the number of the unit cubes.

The computing device 120 may map each point of the point cloud of static objects (i.e., the point cloud of the background) which is located in a unit cube to a grid point of the unit cube, thereby generating a point-cloud-mapped point. For each ray, the computing device 120 can select a plurality of points on the ray (for example, a point can be selected at every predetermined length), and the points located in a unit cube are mapped to the grid point of the unit cube, thereby generating a ray-mapped point.

For a point on a ray, the computing device 120 determines whether the ray-mapped point corresponding to the point is coincident with a point-cloud-mapped point (the ray-mapped point being coincident with the point-cloud-mapped point means that the ray-mapped point and the point-cloud-mapped point are located at the same grid point). If the ray-mapped point is coincident with a point-cloud-mapped point, a sampling point is generated according to at least one of the point on the ray, the point-cloud-mapped point, and a point of the point cloud corresponding to the point-cloud-mapped point (i.e., the point of the point cloud through mapping of which the point-cloud-mapped point is generated). In some embodiments, when the ray-mapped point is coincident with the point-cloud-mapped point, one of the point on the ray, the point-cloud-mapped point, and the point of the point cloud which corresponds to the point-cloud-mapped point may be selected as the sampling point. The sampling point thus obtained is an approximation of the intersection point. This approximation can speed up the training process of the neural network model and save computing resources. For each selected point on each ray, the computing device 120 may determine in the same way whether a corresponding ray-mapped point thereof is coincident with a point-cloud-mapped point.

If no ray-mapped points of a ray is coincident with any point-cloud-mapped point, the computing device 120 may select a point on the ray (the distance between the point and the origin of the ray is greater than the distance between the origin of the ray and the farthest point in the scene) as a sampling point.

In some embodiments, the point-cloud-mapped points (i.e., the coordinates of the point-cloud-mapped points) can be stored in a table (e.g., a Hash table), and for each ray-mapped point, the computing device 120 determines whether the ray-mapped point is coincident with a point-cloud-mapped point through looking up the table (i.e., looking up the table to determine whether the table contains the same coordinates as the ray-mapped point).

In some embodiments, the computing device 120 may quantize the point-cloud-mapped points (i.e., by quantizing the coordinates thereof), and store the quantized point-cloud-mapped points (i.e., quantized coordinates) in a table (e.g., a Hash table). For each ray-mapped point, the computing device 120 also quantizes the ray-mapped point (i.e., by quantizing the coordinates thereof), and then determines whether the ray-mapped point is coincident with a point-cloud-mapped point through looking up the table (i.e., looking up the table to determine whether the table contains the same quantized coordinates as those of the ray-mapped point). An example of quantization is to multiply the coordinates by a constant (a quantization constant) and then perform rounding operation.

Those skilled in the art may understand that with a proper quantization constant selected, the coordinates of points (the number of the points can be one or more) of a point cloud (e.g., a point cloud of static objects) which are located in a unit cube are quantized, and the same quantized coordinates can be obtained by quantizing the coordinates of the corresponding point-cloud-mapped points. Moreover, quantizing the coordinates of a point on the ray may obtain the same quantized coordinates as quantizing the coordinates of a corresponding ray-mapped point. At this time, the quantized coordinates of the point of the point cloud are the same as the quantized coordinates of the corresponding point-cloud-mapped point, and the quantized coordinates of the point on the ray are the same as the quantized coordinates of the corresponding ray-mapped point. Therefore, in some embodiments, the points of the point cloud may be quantized (i.e., the coordinates thereof are quantized), and the quantized points of the point cloud (i.e., the quantized coordinates thereof) can be stored in a table (e.g., a Hash table). A point on the ray is quantized (i.e., the coordinates thereof are quantized), and according to a resultant value (i.e., the quantized coordinates), an inquiry is made as to whether there is a corresponding value (e.g., a value equal to the resultant value) in the table. If there is such a value, a sampling point is generated according to at least one of the point on the ray and the point of the point cloud corresponding to the value in the table. For example, either of the point on the ray or the point of the point cloud corresponding to the value in the table can be selected as the sampling point.

In an example, the adjacent side edges of each unit cube of the grid are respectively parallel to the three axes of the world coordinate system. Lengths of the side edges of the unit cubes are a, b, and c (measured by centimeter), where a, b, and c can be any real numbers greater than 0, and a, b, and c can be equal with each other. In some embodiments, a, b, and c are any integers greater than 0. The vertex of each unit cube closest to the origin of the world coordinate system is the grid point of the unit cube. The three coordinates (i.e., an X coordinate, a Y coordinate, and a Z coordinate) of the point (the point of the point cloud or the point on the ray) are each divided by the length of a corresponding side edge of the unit cube, that is, the X coordinate is divided by the length of the side edge of the unit cube parallel to the X axis (e.g., a), the Y coordinate is divided by the length of the side edge of the unit cube parallel to the Y axis (e.g., b), and the Z coordinate is divided by the length of the side edge of the unit cube parallel to the Z axis (e.g., c), which is followed by rounding a resultant value to realize quantization.

For example, if the coordinates of a point (a point of the point cloud or point on the ray) are (X, Y, Z), and the quantization constants are set to be 1/a, 1/b, and 1/c (i.e., reciprocals of the lengths of adjacent three side edges of the unit cube ), then the coordinates (X, Y, Z) are multiplied by the constants 1/a, 1/b, and 1/c to obtain a set of values (X/a, Y/b, Z/c), and X/a, Y /b, and Z/c are each rounded to obtain the quantized coordinates of the point, i.e., ([X/a], [Y/b], [Z/c]), where the operator "[]" denotes rounding.

In some embodiments, the computing device 120 may generate a plurality of grids of different scales (i.e., different grids have unit cubes of different scales), so as to use a plurality of grids of different scales to determine the positional relationship between the rays and the point cloud of the static objects. For example, the space defined by a world coordinate system can be divided into a plurality of 3D grids. Each grid may include equal-scaled unit cubes (i.e., voxels), which are arranged next to each other. The number of the grids generated by computing device 120 may be two or three or more. For any two of the plurality of grids generated by the computing device 120, if the scale of one grid (i.e., a first grid) is larger than the scale of the other grid (i.e., a second grid), that is, the unit cube of the first grid is larger than the unit cube of the second grid, then each unit cube of the first grid includes at least two unit cubes of the second grid, and each unit cube of the second grid does not span two or more unit cubes of the first grid.

In some embodiments, for any two of the plurality of grids generated by the computing device 120, the lengths of adjacent side edges of each unit cube of a grid are respectively a, b, and c (measured by centimeter), where a, b, and c may be any real number greater than 0 or any integer greater than 0, and a, b, and c may be equal with each other. The lengths of adjacent side edges of each unit cube of the other grid are n times of a, b, and c (i.e., nxa, nxb, n×c), where n is a positive integer greater than or equal to 2.

The computing device 120 may select a point from each unit cube of a grid as a grid point, and also select a point from each unit cube of every other grid as a grid point. For example, the vertex of each unit cube closest to the origin of the world coordinate system may be selected as the grid point of the unit cube.

The computing device 120 may map each of the points of the point cloud of static objects (i.e., the point cloud of the background), which are located in a unit cube of a grid, to the grid point of the unit cube, thereby generating a point-cloud-mapped point. For each ray, the computing device 120 can select a plurality of points from the ray (for example, a point can be selected at every predetermined length), and those located in a unit cube of a grid are mapped to the grid point of the unit cube, thereby generating a ray-mapped point. The point-cloud-mapped points and ray-mapped points may be generated for other grids similarly.

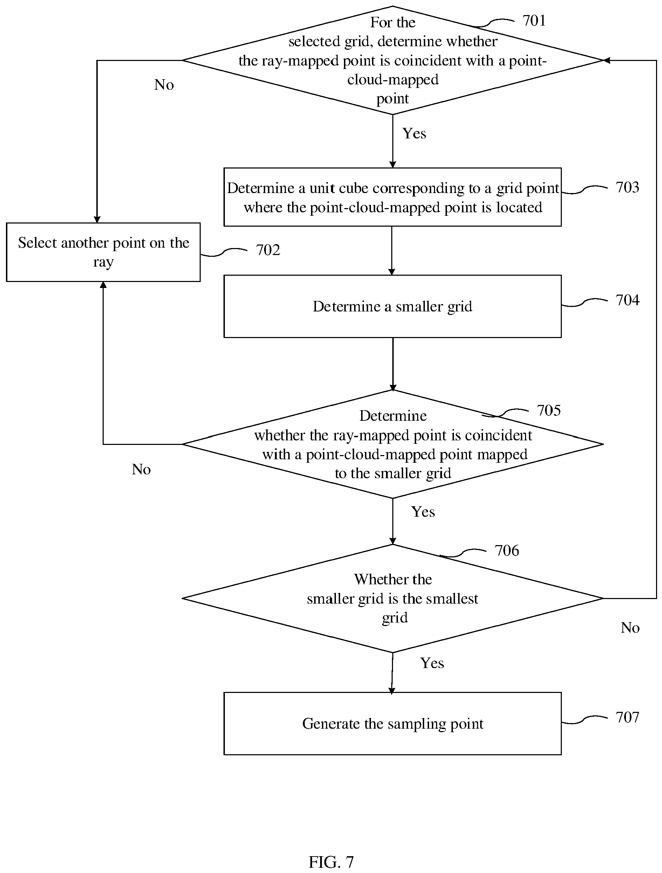

FIG. 7 is a flowchart of a process of generating a plurality of sampling points using a plurality of grids according to an exemplary embodiment of the present disclosure. For a selected point on a ray, the computing device 120 selects a grid, for example, selects a grid with the largest scale (i.e., the grid with the largest unit cube). As shown in FIG. 7, in step 701, the computing device 120 determines whether the ray-mapped point corresponding to the point on the ray is coincident with a point-cloud-mapped point (the ray-mapped point and point-cloud-mapped point here both refer to the ray-mapped point and point-cloud-mapped point mapped to the selected grid). If in step 701, the computing device 120 determines that the ray-mapped point corresponding to the point on the ray is not coincident with any point-cloud-mapped point, the process proceeds to step 702. According to the present application, when the computing device 120 determines that the ray-mapped point corresponding to the point on the ray is not coincident with any point-cloud-mapped point in step 701, the computing device 120 skips the unit cube of the selected grid which corresponds to the grid point where the point-cloud-mapped point is located, that is, the computing device 120 no longer determines whether the corresponding ray-mapped point is coincident with the point-cloud-mapped point for other points on the ray that fall into the unit cube. Moreover, the computing device 120 skips the unit cubes of grids smaller than the selected grid which are located in the unit cube, that is, the computing device 120 no longer determines whether the ray-mapped point corresponding to the selected point on the ray is coincident with the point-cloud-mapped point for the unit cubes of these small-scale girds. By skipping the unit cube of the grid and the corresponding unit cubes of the small-scale grids, the efficiency of generating the sampling point may be improved. In step 702, the computing device 120 selects another point on the ray in a predetermined distance from the point previously selected. By properly setting the predetermined distance, it is possible to locate the newly selected point in a different unit cube of the selected grid, with respect to the previously selected point. Then, the process returns to step 701, and the computing device 120 determines whether the ray-mapped point corresponding to the newly selected point on the ray is coincident with a point-cloud-mapped point. If the ray-mapped points of this ray are all not coincident with any point-cloud-mapped points for the selected grid, the computing device 120 may select a point on the ray (the distance between the point and the origin of the ray is greater than the distance between the origin of the ray and the farthest point in the scene) as the sampling point. If in step 701, the computing device 120 determines that the ray-mapped point is coincident with a point-cloud-mapped point, the process proceeds to step 703, and in step 703, the computing device 120 determines the unit cube corresponding to the grid point where the point-cloud-mapped point is located (i.e., the unit cube in the selected grid). Later in step 704, the computing device 120 determines a plurality of unit cubes of a grid smaller than the selected grid which are located in the unit cube of the selected grid, and in step 705, determines whether the ray-mapped point of the point on the ray mapped to the smaller grid is coincident with a point-cloud-mapped point mapped to the smaller grid. If in step 705, the computing device 120 determines that the ray-mapped point is coincident with a point-cloud-mapped point mapped to the smaller grid, then in step 706, the computing device 120 determines whether the smaller grid is the smallest grid; if so, in step 707, the sampling point is generated according to at least one of the point on the ray, the point-cloud-mapped point mapped to the smaller grid, and the point of the point cloud corresponding to the point-cloud-mapped point, or any one of the points on the ray, the point-cloud-mapped point mapped to the smaller grid, and the point of the point cloud corresponding to the point-cloud-mapped point is selected as the sampling point. If in step 705, the computing device 120 determines that no point-cloud-mapped point mapped to the smaller grid is coincident with the ray-mapped point, the process returns to step 702. If in step 706, the computing device 120 determines that the smaller grid is not the smallest grid, then the computing device 120 selects a grid even smaller than the smaller grid, and the process returns to step 701.

In some embodiments, for each grid, the point-cloud-mapped points (e.g., the coordinates of the point-cloud-mapped points) may be stored in a table (e.g., a Hash table), and for each ray-mapped point, the computing device 120 looks up the table to determine whether the ray-mapped point is coincident with a point-cloud-mapped point (i.e., looking up the table to determine whether the table contains the same coordinates as those of the ray-mapped point).

In some embodiments, for each grid, the computing device 120 may quantize the point-cloud-mapped points (i.e., by quantizing the coordinates thereof), and store the quantized point-cloud-mapped points (i.e., quantized coordinates) in a table (e.g., a Hash table). For each ray-mapped point, the computing device 120 also quantizes the ray-mapped point (i.e., by quantizing the coordinates thereof), and then determines whether the ray-mapped point is coincident with a point-cloud-mapped point through looking up the table (i.e., looking up the table to determine whether the table contains the same quantized coordinates as those of the ray-mapped point). An example of quantization is to multiply the coordinates by a constant and then perform rounding operation.

Those skilled in the art may understand that with a proper quantization constant selected, the coordinates of points (the number of the points can be one or more) of a point cloud (e.g., a point cloud of static objects) which are located in a unit cube are quantized, and the same quantized coordinates can be obtained by quantizing the coordinates of the corresponding point-cloud-mapped points. Moreover, quantizing the coordinates of a point on the ray may obtain the same quantized coordinates as quantizing the coordinates of a corresponding ray-mapped point. At this time, the quantized coordinates of the point of the point cloud are the same as the quantized coordinates of the corresponding point-cloud-mapped point, and the quantized coordinates of the point on the ray are the same as the quantized coordinates of the corresponding ray-mapped point. Therefore, in some embodiments, for each grid, the computing device 120 may quantize the points of the point cloud (i.e., by quantizing the coordinates thereof), and save the quantized points of the point cloud (i.e., the quantized coordinates thereof) in a table (e.g., a Hash table). If the number of the grids is 2, the number of the tables is also 2. The quantized points of the point cloud with respect to the large-scale grid are stored in the first table, and the quantized points of the point cloud with respect to the small-scale grid are stored in the second table, hence each value of the first table corresponds to at least two values of the second table. For a point on the ray, the computing device 120 first looks up the first table to determine whether there is a relevant value in the first table, for example, the same value as first quantized coordinates of the point on the ray. If there is such a relevant value, the computing device 120 determines multiple values in the second table that correspond to the value found in the first table. Then, the computing device 120 determines whether there is a value among the multiple values in the second table that is relevant to the point, for example, the same value as second quantized coordinates of the point on the ray. If there is such a value, the point on the ray may be taken as a sampling point. The first quantized coordinates are the quantized coordinates of the point on the ray with respect to the large-scale grid, and the second quantized coordinates are the quantized coordinates of the point on the ray with respect to the small-scale grid. The same may be done for all points on the ray to determine a plurality of sampling points.

As described above, a Hash table may be adopted to store point-cloud-mapped points, quantized point-cloud-mapped points, or quantized points of the point cloud, and each grid corresponds to a Hash table. In some embodiments, positions (i.e., coordinates) of the point-cloud-mapped points, the quantized point-cloud-mapped points, or the quantized points of the point cloud may be taken as keys to construct a Hash table, and the value of the hash table stores attribute information of a corresponding point (i.e. point-cloud-mapped point, quantized point-cloud-mapped point, or quantized point of the point cloud), the attribute information indicating the semantic category of the point, i.e., the object associated with the point. It can be learned from the attribute information whether the point is associated with a static object or a dynamic object. If the point is associated with a dynamic object, it can be known from the attribute information which dynamic object the point is associated with (e.g., vehicle 331 or vehicle 332).

In the case where the first part of the scene is a dynamic object (e.g., the vehicle 331) of the scene, the computing device 120 determines a plurality of sampling points about the dynamic object according to the relative positional relationship between the rays and the point cloud of the dynamic object. In some embodiments, to simplify the calculation, a representation of the dynamic object (e.g., a bounding box) may be used to determine the positional relationship between the rays and the point cloud of the dynamic object. It has been described above that each ray generated for the dynamic object includes the origin and direction of the ray in an object coordinate system. The intersection points of the rays with the representation of the dynamic object (e.g., the bounding box) may be determined in the object coordinate system as sampling points.

In step 404, color information of pixels of the image which correspond to the sampling points is determined.

As described above, each ray is determined according to a pixel of the image, and after at least one sampling point is determined according to the ray, the color information of the pixel can be associated with the sampling point. The color information of the pixel is actually determined by the content of the scene represented by the sampling point.

In step 405, a neural network model is trained according to the sampling points (or the position of the sampling points) and the color information of the pixels.

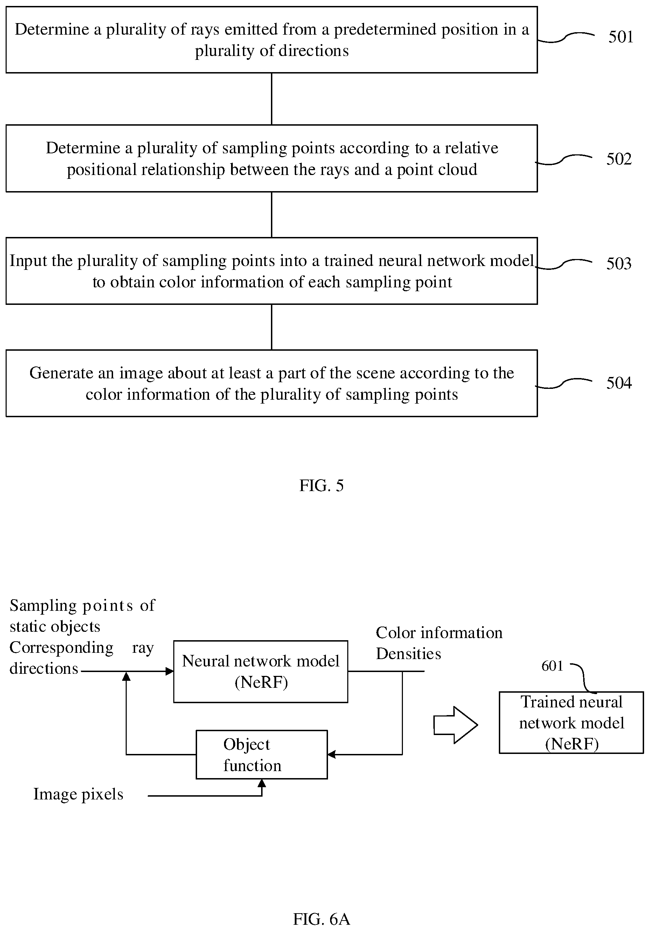

The neural network model can be trained with the sampling points and the color information of the pixels. FIGS. 6A to 6C are schematic diagrams of training a neural network model according to an exemplary embodiment of the present disclosure. An example of the neural network model is neural radiance fields (NeRF), its input is points in 3D space and the orientation of the points, and its output is the color and density (or transparency) of the points.

For each ray, the (one or more) sampling points obtained by means of the ray (i.e., the position information of the sampling points, such as coordinates) and the direction of the ray are input into the neural network model, and the neural network model outputs the color information and density corresponding to each sampling point. The density is taken as a weight to accumulate color information, and the accumulated color information is compared with the color information of the pixel corresponding to the ray. According to the comparison result, one or more values of one or more parameters of the neural network model are modified until a satisfactory comparison result is obtained, thereby completing the training of the neural network model.

In some embodiments, an objective function may be evaluated. The objective function compares the accumulated color information of all the sampling points of a ray that is generated by the neural network model with the color information of the pixel corresponding to the ray, and performs the same for all the rays. One or more parameters of the neural network model are then modified according at least in part to the objective function, thereby training the neural network model.

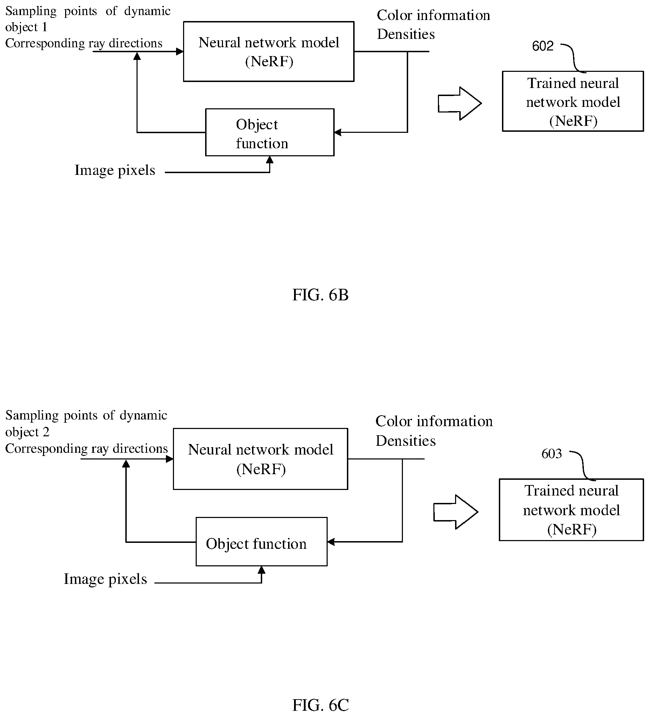

In some embodiments, the computing device 120 may generate a plurality of trained neural network models, and label these trained network models to distinguish neural network models trained by using sampling points of static objects from those trained by using sampling points of dynamic objects. In some embodiments, labeling the network model also distinguishes neural network models trained with sampling points of different dynamic objects. FIG. 6A shows that a neural network model is trained by using the sampling points of static objects, and a trained neural network model 601 can be obtained. FIG. 6B shows that a neural network model is trained by using the sampling points of a first dynamic object (e.g., the dynamic object 331 shown in FIGS. 3A and 3B), and a trained neural network model 602 can be obtained. FIG. 6C shows that the neural network model is trained by using the sampling points of a second dynamic object (e.g., the dynamic object 332 shown in FIGS. 3A and 3B), and a trained neural network model 603 can be obtained. The computing device 120 associates the trained neural network model 601 with the static objects, associates the trained neural network model 602 with the first dynamic object, and associates the trained neural network model 603 with the second dynamic object by labeling these trained neural network models.

FIG. 5 is a method for generating an image using a trained neural network model (for example, the neural network model trained by the method shown in FIG. 4) according to an exemplary embodiment of the present disclosure. The method for generating an image may be performed by, for example, the computing device 120 shown in FIG. 2. The image generated by the method may be an image of a scene (for example, the scene 300 shown in FIGS. 3A and 3B, or a scene associated with the scene 300 shown in FIGS. 3A and 3B) or an image of a part of the scene. The process is also called rendering. An example of the scene associated with the scene 300 shown in FIG. 3A and FIG. 3B is the scene obtained by changing the position and/or pose of the dynamic objects in the scene 300. The computing device 120 may change the position and/or pose of dynamic objects in the scene 300 according to users' selections.

As shown in FIG. 5, in step 501, the computing device 120 determines a plurality of rays emitted from a predetermined position in a plurality of directions. The basic sensing process of the camera can be simply summarized as follows. Each ray emitted from the camera, when hitting a surface of an object in the world, records the color value of the surface and returns, and finally, the camera generates image pixels based on these rays. In fact, there are many translucent objects. Density (or transparency) can be used to measure the degree of being transparent of the object. The more transparent the object is, the lower the density of the object is. Then the above camera sensing process is extended to record the color value (i.e., color information) and density value at all positions where the ray passes through, and finally, the density is taken as a weight to accumulate these color values to obtain a final image.

According to the sensing process of the camera, to generate an image of the scene, the computing device 120 may generate a virtual camera, and determine parameters of the virtual camera (i.e., internal parameters and external parameters of the virtual camera) according to the users' selections. Usually, a user can select the parameters of the virtual camera according to the content of the scene to be imaged. Then, the computing device 120 generates a plurality of rays from the position of the virtual camera (i.e., the position of the viewpoint) in a plurality of directions according to the parameters of the camera. These rays each include an origin and direction. Typically, the position of the virtual camera is taken as the origin of the ray. Each ray may correspond to a pixel of the image to be generated.

In step 502, the computing device 120 determines a plurality of sampling points according to the relative positional relationship between the rays and a point cloud (the point cloud is associated with at least a part of the scene). The at least part of the scene mentioned here may be the scene content including only static objects or only dynamic objects. For example, the at least part of the scene may be static objects (i.e., the background) or a dynamic object (e.g., the vehicle 331 or the vehicle 332) of the scene 300. The at least part of the scene mentioned here may also be the scene content including both static objects and dynamic objects.

The computing device 120 may determine a plurality of sampling points according to the rays and the point cloud associated with the part of the scene. These sampling points can determine the colors of the pixels corresponding to the rays. In other words, the colors of the pixels corresponding to the rays are associated with these sampling points. Each point in the point cloud includes position data, which reflects positions of relevant content or objects in the scene. Given the origin and direction of a ray, one or more intersection points (i.e., the sampling points) of the ray with the relevant content or objects of the scene can be determined in conjunction with the point cloud.

As described above, the computing device 120 generates a point cloud of the background (i.e., a point cloud of static objects) and (one or more) point clouds of dynamic objects for the scene 300. The computing device 120 determines a plurality of sampling points about the static objects (i.e., the background) according to the relative positional relationship between the rays and the point cloud of the static objects (i.e., the point cloud of the background).

For the scene content that contains both static objects and dynamic objects (the pose of the dynamic objects in the scene can be set by the user), the computing device 120 determines a plurality of sampling points about the scene content according to the relative positional relationship between the rays and the point cloud of the scene content. As described above, each point of the point cloud of the static objects has a set of coordinates in the world coordinate system. For the point cloud of a dynamic object, a set of coordinates of each point of the point cloud of the dynamic object in the world coordinate system can be determined according to the pose of the dynamic object in the scene that is set by the user. Such point clouds of the dynamic objects and static objects are combined to form the point cloud of the scene content. Each point in the point cloud of the scene content has a set of coordinates in the world coordinate system. In addition to position information, each point in the point cloud of the scene content has attribute information, which indicates the semantic category of the point, i.e., the object associated with the point. It can be learned from the attribute information whether the point is associated with a static object or a dynamic object. If the point is associated with a dynamic object, it can be known from the attribute information which dynamic object the point is associated with.

In some embodiments, the computing device 120 may generate a grid, and use the grid to determine the positional relationship between the rays and the point cloud of the static objects or the aforementioned point cloud of the scene content. For example, the space defined by a world coordinate system may be divided into a three-dimensional (3D) grid. The 3D grid may include equally sized unit cubes (also referred to as voxels), which are arranged next to each other. The computing device 120 may select a point in each unit cube as a grid point. For example, a vertex of each unit cube closest to the origin of the world coordinate system may be selected as the grid point of the unit cube. In this way, the grid generated by the computing device 120 may have a plurality of grid points, and the number of grid points is the same as the number of the unit cubes.

The computing device 120 can map each point of the point cloud of static objects or the aforementioned point cloud of the scene content which is located in a unit cube to a grid point of the unit cube, thereby generating a point-cloud-mapped point (each point-cloud-mapped point also has the attribute information of the point of the point cloud corresponding thereto). For each ray, the computing device 120 can select a plurality of points on the ray (for example, a point can be selected at every predetermined length), and the points located in a unit cube are mapped to the grid point of the unit cube, thereby generating a ray-mapped point.

For a point on a ray, the computing device 120 determines whether the ray-mapped point corresponding to the point is coincident with a point-cloud-mapped point (the ray-mapped point being coincident with the point-cloud-mapped point means that the ray-mapped point and the point-cloud-mapped point are located at the same grid point). If the ray-mapped point is coincident with a point-cloud-mapped point, a sampling point is generated according to at least one of the point on the ray, the point-cloud-mapped point, and a point of the point cloud corresponding to the point-cloud-mapped point (i.e., the point of the point cloud through mapping of which the point-cloud-mapped point is generated), and the generated sampling point has attribute information of the point-cloud-mapped point. In some embodiments, one of the point on the ray, the point-cloud-mapped point, and the point of the point cloud corresponding to the point-cloud-mapped point may be selected as the sampling point, which has attribute information of the point-cloud-mapped point. The sampling point thus obtained is an approximation of the intersection point. This approximation can speed up the process of generating an image and save computing resources. For each selected point on each ray, the computing device 120 may determine in the same way whether a corresponding ray-mapped point thereof is coincident with a point-cloud-mapped point.

If no ray-mapped points of a ray is coincident with any point-cloud-mapped point, the computing device 120 may select a point on the ray (the distance between the point and the origin of the ray is greater than the distance between the origin of the ray and the farthest point in the scene) as a sampling point.

In some embodiments, the point-cloud-mapped points (i.e., the coordinates of the point-cloud-mapped points) can be stored in a table (e.g., a Hash table), and for each ray-mapped point, the computing device 120 determines whether the ray-mapped point is coincident with a point-cloud-mapped point through looking up the table (i.e., looking up the table to determine whether the table contains the same coordinates as the ray-mapped point).

In some embodiments, the computing device 120 may quantize the point-cloud-mapped points (i.e., by quantizing the coordinates thereof), and store the quantized point-cloud-mapped points (i.e., quantized coordinates) in a table (e.g., a Hash table). For each ray-mapped point, the computing device 120 also quantizes the ray-mapped point (i.e., by quantizing the coordinates thereof), and then determines whether the ray-mapped point is coincident with a point-cloud-mapped point through looking up the table (i.e., looking up the table to determine whether the table contains the same quantized coordinates as those of the ray-mapped point). An example of quantization is to multiply the coordinates by a constant (a quantization constant) and then perform rounding operation.

Those skilled in the art may understand that with a proper quantization constant selected, the coordinates of points (the number of the points can be one or more) of a point cloud (e.g., a point cloud of static objects or the aforementioned point cloud of the scene content) which are located in a unit cube are quantized, and the same quantized coordinates can be obtained by quantizing the coordinates of the corresponding point-cloud-mapped points. Moreover, quantizing the coordinates of a point on the ray may obtain the same quantized coordinates as quantizing the coordinates of a corresponding ray-mapped point. At this time, the quantized coordinates of the point of the point cloud are the same as the quantized coordinates of the corresponding point-cloud-mapped point, and the quantized coordinates of the point on the ray are the same as the quantized coordinates of the corresponding ray-mapped point. Therefore, in some embodiments, the points of the point cloud may be quantized (i.e., the coordinates thereof are quantized), and the quantized points of the point cloud (i.e., the quantized coordinates thereof) can be stored in a table (e.g., a Hash table). A point on the ray is quantized (i.e., the coordinates thereof are quantized), and according to a resultant value (i.e., the quantized coordinates), an inquiry is made as to whether there is a corresponding value (e.g., a value equal to the resultant value) in the table. If there is such a value, a sampling point is generated according to at least one of the point on the ray and the point of the point cloud corresponding to the value in the table. For example, either of the point on the ray or the point of the point cloud corresponding to the value in the table can be selected as the sampling point.

In some embodiments, the computing device 120 may generate a plurality of grids of different scales (i.e., different grids have unit cubes of different scales), so as to use a plurality of grids of different scales to determine the positional relationship between the rays and the point cloud of the static objects or the aforementioned point cloud of the scene content. For example, the space defined by a world coordinate system can be divided into a plurality of 3D grids. Each grid may include equal-scaled unit cubes (i.e., voxels), which are arranged next to each other. The number of the grids generated by computing device 120 may be two or three or more. For any two of the plurality of grids generated by the computing device 120, if the scale of one grid (i.e., a first grid) is larger than the scale of the other grid (i.e., a second grid), that is, the unit cube of the first grid is larger than the unit cube of the second grid, then each unit cube of the first grid includes at least two unit cubes of the second grid, and each unit cube of the second grid does not span two or more unit cubes of the first grid.

In some embodiments, for any two of the plurality of grids generated by the computing device 120, the lengths of adjacent side edges of each unit cube of a grid are respectively a, b, and c (measured by centimeter), where a, b, and c may be any real number greater than 0 or any integer greater than 0, and a, b, and c may be equal with each other. The lengths of adjacent side edges of each unit cube of the other grid are n times of a, b, and c (i.e., n×a, n×b, n×c), where n is a positive integer greater than or equal to 2.

The computing device 120 may select a point from each unit cube of a grid as a grid point, and also select a point from each unit cube of every other grid as a grid point. For example, the vertex of each unit cube closest to the origin of the world coordinate system may be selected as the grid point of the unit cube.

The computing device 120 may map each of the points of the point cloud of static objects or the aforementioned point cloud of the scene content, which are located in a unit cube of a grid, to the grid point of the unit cube, thereby generating a point-cloud-mapped point. For each ray, the computing device 120 can select a plurality of points from the ray (for example, a point can be selected at every predetermined length), and those located in a unit cube of a grid are mapped to the grid point of the unit cube, thereby generating a ray-mapped point. The point-cloud-mapped points and ray-mapped points may be generated for other grids similarly.

In some embodiments, the computing device 120 may adopt the process shown in FIG. 7 to generate a plurality of sampling points by using a plurality of grids. Each generated sampling point has the attribute information of the corresponding point-cloud-mapped point. The process of FIG. 7 has been described in detail above and will not be repeated here for the sake of brevity.

In some embodiments, for each grid, the point-cloud-mapped points (e.g., the coordinates of the point-cloud-mapped points) may be stored in a table (e.g., a Hash table), and for each ray-mapped point, the computing device 120 looks up the table to determine whether the ray-mapped point is coincident with a point-cloud-mapped point (i.e., looking up the table to determine whether the table contains the same coordinates as those of the ray-mapped point).

In some embodiments, for each grid, the computing device 120 may quantize the point-cloud-mapped points (i.e., by quantizing the coordinates thereof), and store the quantized point-cloud-mapped points (i.e., quantized coordinates) in a table (e.g., a Hash table). For each ray-mapped point, the computing device 120 also quantizes the ray-mapped point (i.e., by quantizing the coordinates thereof), and then determines whether the ray-mapped point is coincident with a point-cloud-mapped point through looking up the table (i.e., looking up the table to determine whether the table contains the same quantized coordinates as those of the ray-mapped point). An example of quantization is to multiply the coordinates by a constant and then perform rounding operation.

Those skilled in the art may understand that with a proper quantization constant selected, the coordinates of points (the number of which can be one or more) of a point cloud (e.g., a point cloud of static objects) which are located in a unit cube are quantized, and the same quantized coordinates can be obtained by quantizing the coordinates of the corresponding point-cloud-mapped points. Moreover, quantizing the coordinates of a point on the ray may obtain the same quantized coordinates as quantizing the coordinates of a corresponding ray-mapped point. At this time, the quantized coordinates of the point of the point cloud are the same as the quantized coordinates of the corresponding point-cloud-mapped point, and the quantized coordinates of the point on the ray are the same as the quantized coordinates of the corresponding ray-mapped point. Therefore, in some embodiments, for each grid, the computing device 120 may quantize the points of the point cloud (i.e., by quantizing the coordinates thereof), and save the quantized points of the point cloud (i.e., the quantized coordinates thereof) in a table (e.g., a Hash table). If the number of the grids is 2, the number of the tables is also 2. The quantized points of the point cloud with respect to the large-scale grid are stored in the first table, and the quantized points of the point cloud with respect to the small-scale grid are stored in the second table, hence each value of the first table corresponds to at least two values of the second table. For a point on the ray, the computing device 120 first looks up the first table to determine whether there is a relevant value in the first table, for example, the same value as first quantized coordinates of the point on the ray. If there is such a relevant value, the computing device 120 determines multiple values in the second table that correspond to the value found in the first table. Then, the computing device 120 determines whether there is a value among the multiple values in the second table that is relevant to the point, for example, the same value as second quantized coordinates of the point on the ray. If there is such a value, the point on the ray may be taken as a sampling point. The first quantized coordinates are the quantized coordinates of the point on the ray with respect to the large-scale grid, and the second quantized coordinates are the quantized coordinates of the point on the ray with respect to the small-scale grid. The same may be done for all points on the ray to determine a plurality of sampling points.

As described above, a Hash table may be adopted to store point-cloud-mapped points, quantized point-cloud-mapped points, or quantized points of the point cloud, and each grid corresponds to a Hash table. In some embodiments, positions (i.e., coordinates) of the point-cloud-mapped points, the quantized point-cloud-mapped points, or the quantized points of the point cloud may be taken as keys to construct a Hash table, and the value of the hash table stores attribute information of a corresponding point (i.e. point-cloud-mapped point, quantized point-cloud-mapped point, or quantized point of the point cloud), the attribute information indicating the semantic category of the point, i.e., the object associated with the point. It can be learned from the attribute information whether the point is associated with a static object or a dynamic object. If the point is associated with a dynamic object, it can be known from the attribute information which dynamic object the point is associated with (e.g., vehicle 331 or vehicle 332).

In some embodiments, the computing device 120 determines a plurality of sampling points about the dynamic object according to the relative positional relationship between the rays and the point cloud of the dynamic object. To simplify the calculation, a representation of the dynamic object (e.g., a bounding box) may be used to determine the positional relationship between the rays and the point cloud of the dynamic object. It has been described above that each ray generated for the dynamic object includes the origin and direction of the ray in an object coordinate system. The intersection points of the rays with the representation of the dynamic object (e.g., the bounding box) may be determined in the object coordinate system as sampling points.

In step 503, the computing device 120 inputs the sampling points into the trained neural network model to obtain color information of each sampling point.

As described above, each ray corresponds to a pixel of the image to be generated, and after at least one sampling point is determined for each ray, the computing device 120 inputs the direction of each ray and a sampling point corresponding thereto into the trained neural network model (for example, the neural network model trained according to the embodiment of FIG. 4), so as to obtain the color information and density corresponding to each sampling point of the ray.

As described above, the computing device 120 generates a plurality of trained neural network models, including a neural network model trained by using sampling points of static objects, and a neural network model trained by using sampling points of different dynamic objects. Therefore, if the plurality of sampling points determined by the computing device 120 are all associated with a certain dynamic object, these sampling points are input into the neural network model previously trained by using the sampling points of the dynamic object. For example, if the plurality of sampling points determined by the computing device 120 are all about the dynamic object 331, then these sampling points are input into the trained neural network model 602. If the plurality of sampling points determined by the computing device 120 are all about the dynamic object 332, then these sampling points are input into the trained neural network model 603. If the plurality of sampling points determined by the computing device 120 are all about static objects, these sampling points are input into a neural network model previously trained by using the sampling points of static objects (e.g., the trained neural network model 601). If the plurality of sampling points determined by the computing device 120 include both sampling points about static objects and sampling points about dynamic objects, then according to the attribute information of the sampling points, the sampling points about static objects are input into a neural network model trained by using the sampling points of static objects, and the sampling point of a certain dynamic object is input into a neural network model trained previously by using the sampling point of the dynamic object.

In some embodiments, to improve the authenticity of the generated image, for scene content that contains both static objects and dynamic objects, the computing device 120 generates shadows for the dynamic objects. The computing device 120 determines a contour of a dynamic object according to the point cloud of the dynamic object. The computing device 120 may determine where the sun is in the sky at a moment selected by the user and determine the position and shape of the shadow in conjunction with the pose selected by the user for the object. The computing device 120 may determine which rays intersect the shadow and adjust the color information of the sampling points of these rays according to the color of the shadow.

In step 504, an image about at least a part of the aforementioned scene is generated according to the color information of the sampling points.

For each ray, the neural network model outputs the color information (or adjusted color information) and density corresponding to each sampling point of the ray, accumulates the color information with the density as a weight, and uses the accumulated color information as the color information of the pixel corresponding to the ray. The image to be generated can be obtained according to the color information of the pixels corresponding to the rays. The position of each pixel of the image can be determined according to the origin and direction of the ray and the parameters of the virtual camera.

While the description contains many details, these details should not be construed as limiting the scope of the disclosure as claimed, but rather as describing features specific to particular embodiments. Certain features that are described herein in the context of separate embodiments can also be combined in a single embodiment. In the other way, various features that are described in the context of a single embodiment can also be implemented in a plurality of embodiments separately or in any suitable sub-combination. Furthermore, although features may have been described above as functioning in certain combinations and even initially claimed, one or more features from a claimed combination could in some cases be removed from the combination, and the claimed combination may cover a sub-combination or variations of a sub-combination. Similarly, while operations are depicted in the drawings in a particular order, this should not be construed as requiring that such operations be performed in the particular order shown, or in sequential order, or that all the illustrated operations be performed to achieve desirable results.

Note that the above are only preferred embodiments and technical principles of the present disclosure. Those skilled in the art will understand that the present disclosure is not limited to the specific embodiments described herein, and that various apparent changes, rearrangements, and substitutions may be made by those skilled in the art without departing from the scope of the present disclosure. Therefore, although the present disclosure has been described in detail through the above embodiments, the present disclosure is not limited thereto, and may also include other equivalent embodiments without departing from the concept of the present disclosure. The scope of the present disclosure is defined by the appended claims.

## Claims

1. A method for training a neural network model, comprising:
acquiring an image captured by a camera about a scene;
determining a plurality of rays at least according to parameters of the camera;
determining a plurality of sampling points according to a relative positional relationship between the rays and a point cloud, wherein the point cloud is associated with a part of the scene;
determining color information of pixels of the image which correspond to the sampling points; and
training the neural network model with the sampling points and the color information of the pixels.

2. The method according to claim 1, further comprising:
determining content of the image which is associated with the part of the scene,
wherein determining a plurality of rays at least according to parameters of the camera when capturing the image comprises:
determining the plurality of rays according to the parameters of the camera when capturing the image and the content of the image which is associated with the part of the scene.

3. The method according to claim 2, wherein the part of the scene is a first part of the scene,
wherein determining content of the image which is associated with the part of the scene comprises:
determining content of the image which is associated with a second part of the scene, the second part being different from the first part; and
removing the content of the image which is associated with the second part of the scene from the image.

4. The method according to claim 2, wherein the part is a static part of the scene which comprises one or more static objects of the scene,
wherein determining content of the image which is associated with the part of the scene comprises:
determining content of the image which is associated with a dynamic object of the scene,
determining a projection of the dynamic object according to a moment when the image is captured, and
removing the content associated with the dynamic object and content associated with the projection from the image.

5. The method according to any one of claims 1-4, further comprising:
generating a grid comprising a plurality of grid points,
mapping each point of the point cloud to a respective one of the plurality of grid points to obtain a plurality of point-cloud-mapped points,
preferably, determining a plurality of sampling points according to a relative positional relationship between the rays and a point cloud comprises:
selecting a plurality of points on each of the rays,
for each of the plurality of points on the ray:
mapping the point to one of the plurality of grid points to obtain a ray-mapped point,
determining whether the ray-mapped point is coincident with one of the plurality of point-cloud-mapped points, and
in response to the ray-mapped point being coincident with the one of the plurality of point-cloud-mapped points, generating one of the plurality of sampling points according to one of the point on the ray, the point-cloud-mapped point, and a point of the point cloud which corresponds to the point-cloud-mapped point.

6. The method according to any one of claims 1, 2 and 5, further comprising:
generating a representation of the part of the scene according to the point cloud,
wherein determining a plurality of sampling points according to a relative positional relationship between the rays and a point cloud comprises:
determining intersection points of the rays with the representation as the sampling points,
preferably, the point cloud is an aggregated point cloud, and the method further comprises:
acquiring a sequence of point clouds associated with the part of the scene;
registering the point clouds of the sequence; and
superimposing the registered point clouds with each other to obtain the aggregated point cloud.

7. A method for generating an image, comprising:
determining a plurality of rays emitted from a predetermined position in a plurality of directions,
determining a plurality of sampling points according to a relative positional relationship between the rays and a point cloud, the point cloud being associated with at least a part of a scene,
inputting the plurality of sampling points into a trained neural network model to obtain color information of each sampling point,
generating the image about the at least part of the scene according to the color information of the plurality of sampling points.

8. The method according to claim 7, further comprising:
generating a grid comprising a plurality of grid points,
mapping each point of the point cloud to a respective one of the plurality of grid points to obtain a plurality of point-cloud-mapped points,
preferably, determining a plurality of sampling points according to a relative positional relationship between the rays and a point cloud comprises:
selecting a plurality of points on each of the rays,
for each of the plurality of points on the ray:
mapping the point to one of the plurality of grid points to obtain a ray-mapped point,
determining whether the ray-mapped point is coincident with one of the plurality of point-cloud-mapped points, and
in response to the ray-mapped point being coincident with the one of the plurality of point-cloud-mapped points, generating one of the plurality of sampling points according to one of the point on the ray, the point-cloud-mapped point, and a point of the point cloud which corresponds to the point-cloud-mapped point.

9. The method according to claim 7 or 8, further comprising:
generating a representation of the part of the scene according to the point cloud,
wherein determining a plurality of sampling points according to a relative positional relationship between the rays and a point cloud comprises:
determining intersection points of the rays with the representation as the sampling points.

10. The method according to any one of claims 7-9, wherein the point cloud is an aggregated point cloud, the method further comprising:
acquiring a sequence of point clouds associated with the part of the scene;
registering the point clouds of the sequence; and
superimposing the registered point clouds with each other to obtain the aggregated point cloud.

11. The method according to claim 7 or 8, wherein the point cloud comprises a first point cloud and a second point cloud, the at least part of the scene comprises a first part and a second part of the scene, the first point cloud is associated with the first part, the second point cloud is associated with the second part,
wherein determining a plurality of sampling points according to a relative positional relationship between the rays and a point cloud comprises:
determining the plurality of sampling points and attribute of each sampling point according to relative position relationships between the rays and the first point cloud and between the rays and the second point cloud, the attribute indicating whether a corresponding sampling point is associated with the first part or the second part,

12. The method according to claim 11, wherein the trained neural network model comprises a first trained neural network model and a second trained neural network model,
wherein inputting the plurality of sampling points into a trained neural network model comprises:
input the plurality of sampling points into the first trained neural network model and the second trained neural network model, respectively, according to the attributes of the plurality of sampling points.

13. The method according to claim 11, wherein the first part comprises one or more static objects of the scene, the second part comprises a dynamic object of the scene, and the method further comprises:
generating a simulated shadow of the dynamic object of the scene according to the second point cloud,
obtaining color information of the simulated shadow according to a relative positional relationship between the rays and the simulated shadow,
adjusting color information of ones of the plurality of sampling points associated with the one or more static objects of the scene according to the color information of the simulated shadow.

14. An electronic device, comprising:
a processor; and
a memory storing instructions that, when executed by the processor, cause the processor to perform the method according to any one of claims 1-13.

15. A computer-readable storage medium storing instructions that, when executed by a processor of a computing device, cause the computing device to perform the method according to any one of claims 1-13.
